# EUROPÄISCHE PATENTSCHRIFT

(11) **EP 0 585 671 B1**
(45) Veröffentlichungstag und Bekanntmachung des Hinweises auf die Patenterteilung: **15.05.1996**
(21) Anmeldenummer: 93112840.9
(22) Anmeldetag: 11.08.1993
(51) Int. Cl.: B29C 45/40

(54) **Auswerfereinheit für Spritzgiessmaschinen**
Ejection unit for injection moulding machines
Unité d'éjection pour machines à mouler par injection

(30) Priorität: 25.08.1992 DE 4228140
(43) Veröffentlichungstag der Anmeldung: 09.03.1994
(73) Patentinhaber: Battenfeld Kunststoffmaschinen Ges.m.b.H., A-2542 Kottingbrunn (AT)
(72) Erfinder: Heindl, Friedrich, A-2500 Baden (AT); Bleier, Harald, A-2700 Wr. Neustadt (AT)
(74) Vertreter: Müller, Gerd

(56) Entgegenhaltungen:
- EP-A- 0 285 672
- JP-U-61 010 825
- JP-U-61 028 511
- PATENT ABSTRACTS OF JAPAN vol. 11, no. 281 (M-624)(2728) 11. September 1987 & JP-A-62 080 016 (FANUC)
- PATENT ABSTRACTS OF JAPAN vol. 16, no. 391 (M-1298)19. August 1992 & JP-A-04 129 717 (FANUC)

## Beschreibung

Die Erfindung betrifft eine Auswerfereinheit zur Anbringung an einer Formträgerplatte, vornehmlich der verschiebbaren Formträgerplatte, von Schließvorrichtungen für die Formwerkzeuge bei Spritzgießmaschinen (Siehe z.B. EP-A-0285672).

Spritzgießmaschinen zur Herstellung von Formteilen aus Kunststoff sind üblicherweise aus verschiedenen, miteinander in Wirkverbindung stehenden bzw. tretenden Baugruppen erstellt, die jeweils eine Auslegung für Hydraulikbetrieb haben. Hieraus ergibt sich die Notwendigkeit, entweder jede einzelne Spritzgießmaschine mit einer hydraulischen Druckerzeugungsanlage auszustatten, oder aber sie zumindest mit einer zentralen hydraulischen Druckmittellieferquelle zu verbinden. Die hydraulische Druckerzeugungsanlage bzw. Druckmittellieferquelle muß dabei notwendigerweise eine Auslegung erhalten, die auch dann den benötigten Hydraulikdruck verfügbar macht, wenn es einmal vorkommen sollte, daß alle für den ordnungsgemäßen Betrieb der Spritzgießmaschine vorhandenen Antriebe gleichzeitig mit dem betriebsnotwendigen Druckmittel versorgt werden müssen. Daraus ergibt sich wiederum, daß die Druckerzeugungsanlage bzw. Druckmittellieferquelle für den normalen Hydraulikbetrieb einer Spritzgießmaschine eigentlich überdimensioniert ist und daher entsprechend unwirtschaftlich betrieben werden muß.

Es ist schon (mit Patentanmeldung P 42 20 445.3) der Vorschlag gemacht worden, den Antriebsaufwand für Spritzgießmaschinen zu vermindern und einen kompakteren Gesamtaufbau derselben zu erreichen, indem deren Spritzaggregat eine besondere Auslegung erhält.

Dieser Vorschlag geht dabei von einem Spritzaggregat für Spritzgießmaschinen mit einem mehrere Baugruppen umfassenden modularen Aufbau aus,
- bei dem eine erste Baugruppe aus der von einem Schneckenzylinder und einer Schnecke gebildeten Plastifiziereinheit besteht,
- bei dem eine zweite Baugruppe von dem Dosierantrieb für die Schnecke der Plastifiziereinheit gebildet ist,
- bei dem eine dritte Baugruppe zwei parallelachsig zueinander arbeitende Antriebe umfaßt, über die die Düsenbewegung zwischen Plastifiziereinheit und Spritzwerkzeug betätigbar ist,
- und bei dem eine vierte Baugruppe ebenfalls zwei parallelachsig zueinander arbeitende Antriebe aufweist, über die die Einspritzbewegung der Schnecke im Schneckenzylinder der Plastifiziereinheit als Axialverschiebung hervorbringbar ist,
- wobei sich die Plastifiziereinheit mittig zwischen den beiden parallelachsigen Antrieben von dritter und vierter Baugruppe befindet.

Der verminderte Antriebsaufwand für die Spritzgießmaschine und ein kompakterer Gesamtaufbau derselben wird dabei dadurch erreicht, daß mindestens die beiden parallelachsigen Antriebe der vierten Baugruppe - des modularen Aufbaus - jeweils mit einem wassergekühlten, elektrischen Servomotor ausgestattet sind, und daß dabei diese Servomotoren miteinander für Synchronlauf in Verbindung stehen.

Darüber hinaus ist vorgesehen, daß neben den beiden Antrieben der vierten Baugruppe sowohl die beiden Antriebe der zweiten Baugruppe als auch der Antrieb der dritten Baugruppe jeweils mit wassergekühlten, elektrischen Servomotoren ausgestattet werden sollen.

Es ist damit die Möglichkeit eröffnet, den Betrieb des Spritzaggregates für Spritzgießmaschinen unmittelbar aus dem sowieso vorhandenen elektrischen Energieversorgungsnetz zu ermöglichen und infolgedessen den Antriebsaufwand zu vermindern. Darüber hinaus ergibt sich der vorteil, daß nicht nur alle Bewegungsvorgänge eines Spritzaggregates präziser ablaufen als bei der üblichen Benutzung von Hydraulikantrieben. Vielmehr läßt sich der Gesamtaufwand für die Erstellung einer Spritzgießmaschine minimieren, weil keine hydraulische Druckerzeugungsanlage benötigt wird, sondern sich jeder einzelne Antrieb unmittelbar durch verfügbaren Netzstrom speisen läßt.

Es ist auch schon der Vorschlag bekannt (EP-A1-0 164 419) die Schließvorrichtung zum Schließen von Formen einer Spritzgießmaschine mit einem Servomotor und einem Kraftübertragungsmechanismus auszustatten, der einen Gewindebolzen und einen Muttermechanismus zum Umsetzen einer drehenden Kraft des Servomotors in eine linear wirkende Kraft aufweist, und die dadurch gekennzeichnet ist
- daß die Schließvorrichtung einen Gelenkmechanismus enthält, welcher durch den Kraftübertragungsmechanismus betätigbar ist, um die Formen zu schließen, und
- daß, wenn sich die Gelenke des Gelenkmechanismus in einem gestreckten Zustand befinden, um dadurch die Formen zu schließen, der Servomotor mit einem Strom, der geringer als ein normaler Betriebsstrom ist, betrieben wird, um die Gelenke in dem gestreckten Zustand zu halten.

Auch in diesem Falle ist es vorteilhaft, daß keine hydraulische Druckerzeugungsanlage für den Betrieb der Schließvorrichtung nötig ist, sondern sich der als Antrieb vorgesehene elektrische Servomotor unmittelbar durch verfügbaren Netzstrom speisen läßt. Nachteilig ist hier jedoch noch, daß der Servomotor auch dann noch mit Strom versorgt bleiben muß, wenn die Formen bei Gestrecktlage des Gelenkmechanismus geschlossen sind, weil sonst ein unerwünschtes Öffnen der Formen herbeigeführt werden kann. Dieser bekannte, elektrische Servomotor-Antrieb für Schließvorrichtungen von Spritzgießmaschinen bedingt also noch einen unnötigen, wenn auch relativ geringen, Energieverbrauch und arbeitet dadurch unwirtschaftlich. Deshalb ist auch zu Schließeinheiten für Formwerkzeuge von Spritzgießmaschinen jüngst in Vorschlag gebracht worden, als Elektromotor einen wassergekühlten Servomotor vorzusehen, der eine Hohlwelle aufweist, innerhalb welcher über eine Mutter die Gewindespindel axial verschiebbar ist. welche drehfest an einem oder mehreren als Kraftübertragungsmechanismus dienenden Kniehebelsystemen angreift. Hierbei ist neben einem kompakten Gesamtaufbau erreicht, daß bei Strecklage des von den Kniehebelsystemen gebildeten Kraftübertragungsmechanismus eine völlige Trennung des wassergekühlten Elektromotors vom Versorgungsnetz stattfinden kann und so ein unnötiger Energieverbrauch vermieden ist.

Die vorliegende Erfindung zielt nun darauf ab, auch noch eine Auswerfereinheit der anfangs erwähnten Gattung verfügbar zu machen, die einen von einer hydraulischen Druckerzeugungsanlage bzw. Druckmittellieferquelle unabhängigen Betrieb ermöglicht und daher eine weitere Vereinfachung des Gesamtaufbaues für eine Spritzgießmaschine zuläßt.

Gelöst wird diese Aufgabe nach der Erfindung grundsätzlich dadurch, daß auf einer an der Formträgerplatte ansetzbaren Basis als Auswerferantrieb ein Elektromotor sitzt, daß dieser Elektromotor über ein in die Basis integriertes Stirnradgetriebe mit mehreren, nämlich mindestens zwei, von der Basis abstehenden und drehantreibbaren Gewindespindeln in ständer Stellverbindung steht, daß auf den Gewindespindeln eine Auswerferplatte über Muttergewinde verstellbar ist, und daß die Auswerferplatte einen die Basis und die Formträgerplatte durchgreifenden Auswerferstempel trägt.

Eine Auswerfereinheit mit dieser Merkmalsausstattung läßt sich dabei der Schließvorrichtung einer Spritzgießmaschine zuordnen, bei der auch alle übrigen Bau- und Funktionskomponenten (Spritzaggregat, Formen-Schließeinheit usw.) Elektroantriebe haben, die eine unmittelbare Netzstrom-Speisung ermöglichen. Sie kann aber auch solchen Spritzgießmaschinen zugeordnet werden, deren übrige Komponenten in Abhängigkeit von einer hydraulischen Druckerzeugungsanlage bzw. Druckmittellieferquelle betrieben werden, wenn die Leistungsfähigkeit für den zusätzlichen Betrieb einer Auswerfereinheit nicht ausreichen sollte.

Bewährt hat es sich nach der Erfindung, wenn jede drehantreibbare Gewindespindel mit einem Ritzel des Stirnradgetriebes gekuppelt ist und dabei sämtliche mit je einer Gewindespindel gekuppelten Ritzel in ein und dasselbe als Hohl- oder Ringkörper ausgeführtes Stirnrad eingreifen, welches von dem an der Auswerferplatte sitzenden Auswerferstempel durchragt ist.

Die Erfindung sieht darüber hinaus vor, daß der Elektromotor auf der Basis mit seitlichem Abstand von den Gewindespindeln und dem Auswerferstempel montiert ist, vorzugsweise seitwärts in Randnähe der die Basis haltenden Formträgerplatte sitzt.

Vorgesehen ist erfindungsgemäß aber auch, daß der Auswerferstempel sich koaxial zum Hohl- oder Ringkörper-Stirnrad des Stirnradgetriebes erstreckt und daß die Ritzel der Gewindespindeln gleichmäßig am Umfang des Hohl- oder Ringkörper-Stirnrades verteilt angeordnet, vorzugsweise sich paarweise diametral gegenüberliegend gelagert sind.

Schließlich hat es sich auch bewährt, daß außer zwei Gewindespindeln noch zwei dazu parallele Führungsstangen für die Auswerferplatte vorgesehen sind, und daß dabei sowohl die Gewindespindeln als auch die Führungsstangen jeweils auf einer durch den Auswerferstempel geführten Diagonalebene liegen.

Eine erfindungsgemäße Auswerfereinheit mit den Merkmalen der Ansprüche 1 bis 6 ist so aufgebaut, daß der zwischen der verschiebbaren Formträgerplatte und der ortsfesten Antriebsträgerplatte einer Schließeinheit verfügbare, nämlich dort für den Kraftübertragungsmechanismus bzw. die Kniehebelsysteme nicht benötigte Einbauraum zu ihrer Unterbringung optimal genutzt werden kann, ohne daß sich irgendwelche funktionelle Beeinträchtigungen ergeben können.

In der Zeichnung ist der Gegenstand der Erfindung in einem Ausführungsbeispiel zu sehen. Hierbei zeigen
- Figur 1: in teilweise geschnittener Seitenansicht eine Schließvorrichtung für die Formwerkzeuge bei Spritzgießmaschinen, bei der an der verschiebbaren Formträgerplatte eine Auswerfereinheit angebracht ist, und
- Figur 2: schematisch vereinfacht dargestellt, eine Stirnansicht der an der verschiebbaren Formträgerplatte sitzenden Auswerfereinheit entsprechend den parallel versetzten Betrachtungsebenen II-II in Fig. 1.

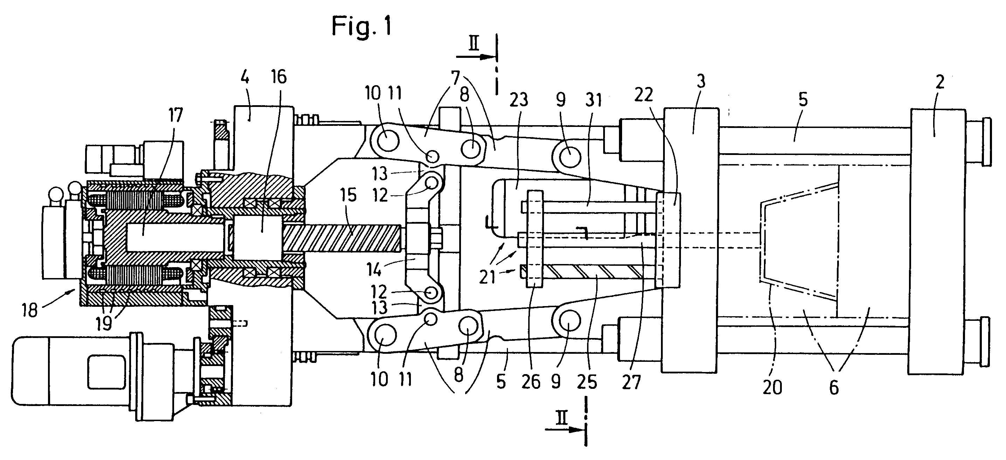

Die aus Fig. 1 der Zeichnung ersichtliche Schließeinheit 1 hat in üblicher Weise eine stationäre Formträger- bzw. Basisplatte 2, eine hierzu relativ verschiebbare Formträgerplatte 3 und eine im wesentlichen ortsfeste Antriebsträgerplatte 4. Dabei sind die Formträger bzw. Basisplatte 2 und die Antriebsträgerplatte 4 miteinander durch Zugglieder 5, bspw. Holme verbunden, die auch zugleich die Führung für die verschiebbare Formträgerplatte 3 bilden können.

Zwischen der Formträger- bzw. Basisplatte 2 und der verschiebbaren Formträgerplatte 3 ist das wechselweise schließ- und öffenbare Formwerkzeug 6 eingebaut. Die Betätigung der Schließeinheit 1 zum Öffnen und Schließen des Formwerkzeugs 6 erfolgt über Kniehebelsysteme 7, die zwischen der Antriebsträgerplatte 4 und der verschiebbaren Formträgerplatte 3 angeordnet sind. Sie weisen jeweils zwei Hebel auf, die einerseits über ein Kniegelenk 8 miteinander in Verbindung stehen, während sie andererseits über ein Endgelenk 9 bzw. 10 an der verschiebbaren Formträgerplatte 3 und an der Antriebsträgerplatte 4 angreifen. Über eine Verbindungslasche 13 sowie zwei dran befindliche Gelenke 11 und 12 arbeiten die Kniehebelsysteme 7 mit einem Kreuzkopf 14 zusammen, der am freien Ende einer drehfest gehaltenen Gewindespindel 15 sitzt, die von einer Mutter 16 umfaßt ist, welcher mit einer Hohlwelle 17 ion drehfester Antriebsverbindung steht. Die Hohlwelle 17 ist Teil eines Elektromotors 18, der bei kompakter Bauweise mit Wasserkühlung 19 versehen ist.

In der aus Fig. 1 ersichtlichen Strecklage der Kniehebelsysteme 7 ist das mit seinen beiden Hälften zwischen der stationären Formträger- bzw. Basisplatte 2 und der verschiebbaren Formträgerplatte 3 angeordnete Formwerkzeug 6 geschlossen.

Aus der in Fig. 1 gezeigten Stellung läßt sich die Gewindespindel 15 durch Drehantrieb der Mutter 16 in die Kohlwelle 17 des Elektromotors 18 zurückfahren, derart, daß das Kniehebelsystem 7 einknickt und dabei die verschiebbare Formträgerplatte 3 zum Öffnen des Formwerkzeugs 6 auf den Zuggliedern 5 nach links verlagert.

Nach dem Öffnen des Formwerkzeugs 6 muß das in dessen Formhohlraum befindliche Formteil 20 aus diesem Formhohlraum ausgestoßen werden, bevor anschließend das Formwerkzeug 6 für einen erneuten Spritzvorgang wieder geschlossen werden kann. Diesem Zweck dient eine Auswerfereinheit 21, die gemäß Fig. 1 der Zeichnung an der Rückseite der verschiebbaren Formträgerplatte 3 angeordnet ist. Die gesamte Auswerfereinheit 21 ist dabei auf einer plattenförmigen Basis 22 montiert und läßt sich mit deren Hilfe als eigenständige Baugruppe an der Formträgerplatte 3 befestigen.

Als Auswerferantrieb ist dabei ein Elektromotor 23 benutzt, welcher bspw. als Getriebemotor ausgelegt ist und auf der Basis 22 sitzt. Über ein in diese Basis 22 integriertes Stirnradgetriebe 24 ist der Elektromotor 23 mit mehreren, bspw. zwei, Gewindespindeln 25 in Drehantriebsverbindung gehalten, welche von der Basis 22 in gleicher Richtung abstehen, wie der Elektromotor 23.

Auf den Gewindespindeln 25 ist über Muttergewinde eine Auswerferplatte 26 verstellbar angeordnet, die wiederum einen Auswerferstempel 27 trägt, welcher die Basis 22 und die Formträgerplatte 3 bis zum Formhohlraum des Formwerkzeugs 6 hin durchgreift, wie das deutlich in Fig. 1 der Zeichnung zu sehen ist.

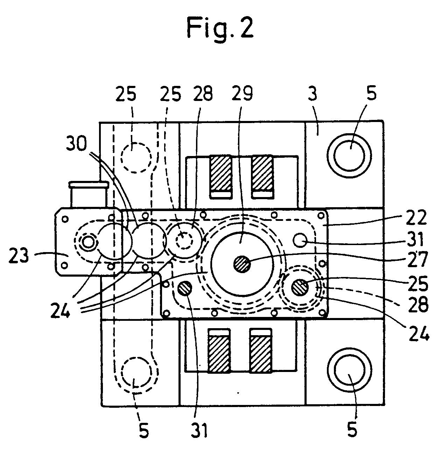

Jede drehantreibbare Gewindespindel 25 ist mit einem eigenen Ritzel 28 des Stirnradgetriebes 24 gekuppelt, und jedes Ritzel 28 kämmt mit einem als Hohl- oder Ringkörper ausgeführten Stirnrad 29, durch welches sich koaxial der von der Auswerferplatte 26 getragene Auswerferstempel 27 erstreckt, wie das deutlich der Fig. 2 entnommen werden kann.

Bewährt hat es sich, den Elektromotor 23 auf der Basis 22 mit seitlichem Abstand von den Gewindespindeln 25 und dem Auswerferstempel 27 zu montieren, und zwar zweckmäßigerweise in der Art, daß er seitwärts in Randnähe der die Basis 22 haltenden Formträgerplatte 3 sitzt, wie das die Fig. 2 besonders deutlich erkennen läßt, Zwischen dem Elektromotor 23 und das der ersten Gewindespindel 25 zugeordnete Ritzel 28 sind dabei mehrere, bspw. zwei weitere Ritzel 30 geschaltet. Die Ritzel 28 der Gewindespindeln 25 haben eine gleichmäßig am Umfang des Kohl- oder Ringkörper-Stirnrades 29 verteilte Anordnung und sind beim Ausführungsbeispiel nach Fig. 2 sich paarweise diametral gegenüberliegend in der Basis 22 gelagert.

Vielfach ist es von Vorteil, außer den beiden Gewindespindeln 25 noch zwei dazu parallele Führungsstangen 31 starr auf der Basis 22 vorzusehen, und zwar in einer solchen Anordnung, daß sowohl die Gewindespindeln 25 als auch die Führungsstangen 31 jeweils auf einer durch den Auswerferstempel 27 geführten Diagonalebene liegen. An den Führungsstangen 31 wird die Auswerferplatte 26 dann lediglich gleitbeweglich gehalten. Über die in Längsrichtung der Gewindespindeln 25 verlagerbare Auswerferplatte 26 läßt sich der Auswerferstempel 27 bei geöffnetem Formwerkzeug 6 so weit von rückwärts in den Formhohlraum vorschieben, daß das darin befindliche Formteil 20 ausgestoßen wird, bevor anschließend die beiden Hälften des Formwerkzeuges 6 wieder zusammengefahren werden, indem die Kniehebelsysteme 7 in ihre Strecklage gebracht und darin gehalten werden.

Da die Auswerfereinheit 21 mit Hilfe ihrer Basis 22 sich lösbar an der Formträgerplatte 3 anflanschen läßt, ist es möglich, sie jederzeit auf einfache Weise anzubringen und auch wieder zu entfernen. Der Gesamtaufbau der Auswerfereinheit 21 ist dabei von solcher Art, daß sie sich raumsparend in der Nachbarschaft der Kniehebelsysteme 7 unterbringen läßt, ohne daß sie deren Arbeitsweise beeinträchtigt und auch ohne daß ihre Arbeitsweise durch die Kniehebelsysteme 7 beeinträchtigt werden kann.

## Patentansprüche

1. Auswerfereinheit (21) zur Anbringung an einer Formträgerplatte, vornehmlich der verschiebbaren Formträgerplatte (3) von Schließeinheiten (1) für die Formwerkzeuge (6) bei Spritzgießmaschinen,
**dadurch gekennzeichnet,**
daß auf einer an der Formträgerplatte (3) ansetzbaren Basis (22) als Auswerferantrieb ein Elektromotor (23) sitzt,
daß dieser Elektromotor (23) über ein in die Basis (22) integriertes Stirnradgetriebe (24) mit mehreren, nämlich mindestens zwei, von der Basis (22) abstehenden und drehantreibbaren Gewindespindeln (25) in ständiger Stellverbindung steht,
daß auf den Gewindespindeln (25) eine Auswerferplatte (26) über Muttergewinde verstellbar ist,
und daß die Auswerferplatte (26) einen die Basis (22) und die Formträgerplatte (3) durchgreifenden Auswerferstempel (27) trägt.

2. Auswerfereinheit nach Anspruch 1,
**dadurch gekennzeichnet,**
daß jede drehantreibbare Gewindespindel (25) mit einem Ritzel (28) des Stirnradgetriebes (24) gekuppelt ist und daß sämtliche mit je einer Gewindespindel (25) gekuppelten Ritzel (28) in ein und dasselbe als Hohl- oder Ringkörper ausgeführtes Stirnrad (29) eingreifen, welches von dem an der Auswerferplatte (26) sitzenden Auswerferstempel (27) durchragt ist.

3. Auswerfereinheit nach einem der Ansprüche 1 und 2,
**dadurch gekennzeichnet,**
daß der Elektromotor (23) auf der Basis (22) mit seitlichem Abstand von den Gewindespindeln (25) und dem Auswerferstempel (27) montiert ist, vorzugsweise seitwärts in Randnähe der die Basis (22) haltenden Formträgerplatte (3) sitzt.

4. Auswerfereinheit nach einem der Ansprüche 1 bis 3,
**dadurch gekennzeichnet,**
daß der Auswerferstempel (27) sich koaxial zum Hohl- oder Ringkörper-Stirnrad (29) des Stirnradgetriebes (24) erstreckt.

5. Auswerfereinheit nach einem der Ansprüche 1 bis 4,
**dadurch gekennzeichnet,**
daß die Ritzel (28) der Gewindespindeln (25) gleichmäßig am Umfang des Hohl- oder Ringkörper-Stirnrades (29) verteilt angeordnet, vorzugsweise sich paarweise diametral gegenüberliegend gelagert sind.

6. Auswerfereinheit nach einem der Ansprüche 1 bis 5,
**dadurch gekennzeichnet,**
daß außer zwei Gewindespindeln (25) noch zwei dazu parallele Führungsstangen (31) für die Auswerferplatte (26) vorgesehen sind, und daß dabei sowohl die Gewindespindeln (25) als auch die Führungsstangen (31) jeweils auf einer durch den Auswerferstempel (27) geführten Diagonalebene liegen.

## Claims

1. Ejector unit (21) for attachment to a mould carrier plate, especially the displaceable mould carrier plate (3) of closure units (1) for the mould tools (6) at injection moulding machines, characterised thereby that an electric motor (23) as ejector unit is seated on a base attachable to the mould carrier plate (3), that this electric motor (23) stands in constant setting connection with several, namely at least two, rotationally drivable threaded spindles (25), which project from the base (22), by way of a spur wheel gear transmission (24) integrated into the base (22), that an ejector plate (26) is adjustable on the threaded spindles (25) by way of female threads, and that the ejector plate (26) carries an ejector ram (27) penetrating the base (22) and the mould carrier plate (3).

2. Ejector unit according to claim 1, characterised thereby that each rotationally drivable threaded spindle (25) is coupled with a pinion (28) of the spur wheel gear transmission (24) and that all pinions (28), which are each coupled with a respective threaded spindle (25), engage in one and the same spur wheel (29), which is constructed as a hollow body or annular body and which is penetrated by the ejector ram (27) seated at the ejector plate (26).

3. Ejector unit according to one of claims 1 to 2, characterised thereby that the electric motor (23) is mounted on the base (22) at a lateral spacing from the threaded spindles (25) and the ejector plate (27), preferably laterally in edge region of the mould carrier plate (3) holding the base (22).

4. Ejector unit according to one of claims 1 to 3, characterised thereby that the ejector ram (27) extends coaxially to the hollow or annular body spur wheel (29) of the spur wheel gear transmission (24).

5. Ejector unit according to one of claims 1 to 4, characterised thereby that the pinions (28) of the threaded spindles (25) are arranged uniformly distributed at the circumference of the hollow or annular body spur wheel (29), preferably are mounted to be diametrically opposite in pairs.

6. Ejector unit according to one of claims 1 to 5, characterised thereby that apart from two threaded spindles (25), also two guide rods (31), which are parallel thereto, for the ejector plate (26) are provided and that in that case not only the threaded spindles (25) but also the guide rods (31) each time lie on a diagonal plane led through the ejector ram (27).

## Revendications

1. Unité d'éjection (21) destinée à être placée sur un plateau porte-outil, en particulier sur le plateau porte-outil (3) mobile d'unités de fermeture (1) d'outils de moulage (6) dans des presses d'injection, caractérisée en ce qu'une base (22) pouvant être installée sur un des plateaux porte-outil (3) comporte comme mécanisme d'entraînement pour l'éjection un moteur électrique (23), en ce que ce moteur électrique (23) est relié en continu, de manière à pouvoir être réglé via un dispositif d'entraînement à roue dentée (24) intégré dans la base (22), à plusieurs, c'est-à-dire au moins deux, arbres filetés (25) éloignés de la base (22) et entraînés de manière à pouvoir tourner, en ce qu'une contre-plaque d'éjection (26) peut être réglée à l'aide d'un filet femelle sur les arbres filetés (25) et en ce que la contre-plaque d'éjection (26) comporte un poinçon d'éjection (27) passant à travers la base (22) et le plateau porte-outil (3).

2. Unité d'éjection selon la revendication 1, caractérisée en ce que chaque arbre fileté (25) entraîné de manière à pouvoir tourner est accouplé à un pignon (28) du dispositif d'entraînement à roue dentée (24) et en ce que l'ensemble des pignons (28) accouplés à chaque arbre fileté (25) s'agrippent dans une seule et même roue dentée (29) exécutée sous forme d'un corps creux ou annulaire, ladite roue dentée étant traversée par le poinçon d'éjection (27) disposé sur la contre-plaque d'éjection (26).

3. Unité d'éjection selon une quelconque des revendications 1 et 2, caractérisée en ce que le moteur électrique (23) est monté sur la base (22) à une certaine distance latérale des arbres filetés (25) et du poinçon d'éjection (27), de préférence latérale à proximité du bord du plateau porte-outil (3) comportant la base (22).

4. Unité d'injection selon une quelconque des revendications 1 à 3, caractérisée en ce que le poinçon d'éjection (27) s'étend coaxialement par rapport à la roue dentée à corps creux ou annulaire (29) du dispositif d'entraînement à roue dentée (24).

5. Unité d'injection selon une quelconque des revendications 1 à 4, caractérisée en ce que les pignons (28) des arbres filetés (25) sont répartis régulièrement autour de la roue dentée à corps creux ou annulaire (29), de préférence par paires diamétralement opposées.

6. Unité d'éjection selon une quelconque des revendications 1 à 5, caractérisée en ce qu'on a encore prévu, outre les deux arbres filetés (25), deux tiges de guidage (31) parallèles auxdits arbres pour la contre-plaque d'éjection (26) et en ce que les arbres filetés (25) ainsi que les tiges de guidage (31) sont situés dans un plan diagonal passant à travers le poinçon d'éjection (27).
